# EUROPÄISCHE PATENTSCHRIFT

(11) **EP 3 898 310 B1**
(45) Veröffentlichungstag und Bekanntmachung des Hinweises auf die Patenterteilung: **07.08.2024**
(21) Anmeldenummer: 19813767.1
(22) Anmeldetag: 29.11.2019
(51) Int. Cl.: B60K 37/00

(54) **VERFAHREN UND SYSTEM ZUM EINSTELLEN EINES WERTES EINES PARAMETERS**
METHOD AND SYSTEM FOR SETTING A VALUE FOR A PARAMETER
PROCÉDÉ ET SYSTÈME POUR RÉGLER LA VALEUR D'UN PARAMÈTRE

(30) Priorität: 18.12.2018 DE 102018222124
(43) Veröffentlichungstag der Anmeldung: 27.10.2021
(73) Patentinhaber: VOLKSWAGEN AKTIENGESELLSCHAFT, 38440 Wolfsburg (DE)
(72) Erfinder: TRABUCCO, Luigi, 38442 Wolfsburg (DE)
(86) Internationale Anmeldenummer: PCT/EP2019/083035
(87) Internationale Veröffentlichungsnummer: WO 2020/126410

(56) Entgegenhaltungen:
- WO-A1-2014/026854
- US-A1- 2013 145 360

## Beschreibung

Die vorliegende Erfindung betrifft ein Verfahren zum Einstellen eines Wertes eines Parameters.

Sie betrifft ferner ein System zum Einstellen eines Wertes eines Parameters, insbesondere in einem Fahrzeug.

Die zunehmende Verbreitung elektronischer Einrichtungen und Steuerungen, insbesondere in Fahrzeugen, macht nutzerfreundliche Konzepte für die Erfassung von Nutzereingaben erforderlich. Vor allem müssen Parameter zum Einstellen verschiedenster Anwendungen erfasst werden. Zum Beispiel kann ein Nutzer in einem Fahrzeug eine Klimaanlage, ein Radio und ein Navigationssystem bedienen und einstellen. Ein wichtiger Trend ist dabei, dass Bedienoberflächen auf immer größeren Displays dargestellt werden. Bei deren Ausgestaltung sind verschiedene Aspekte zu beachten, die sich erheblich auf die Sicherheit und den Bedienkomfort auswirken können. Richtlinien werden beispielsweise von der *Japan Automobile Manufacturers Association* (JAMA) bereitgestellt.

In der US 2014/096003 A1 wird eine Bedienoberfläche eines Audiosystems in einem Fahrzeug beschrieben. Der Innenraum des Fahrzeugs wird grafisch dargestellt und der Nutzer kann durch Bedienen von Schiebereglern eine optimale Hörposition einstellen.

Die WO 2004/091956 A2 beschreibt konfigurierbare Instrumententafeln mit taktiler Steuerung für Fahrzeuge, wobei auf einer Schirmoberfläche Erhebungen und Vertiefungen erzeugt werden können, unter anderem Linien, mit denen ein Schieberegler implementiert wird.

In der WO 2014/056838 A1 wird eine Eingabe/Ausgabe-Einheit beschrieben, bei der ein Schieberegler mittels eines Auslöse-Stifts verschoben werden kann, um Funktionen im Fahrzeug auszulösen.

Die WO 02/064488 A2 schlägt ein intelligentes Assistenzsystem mit einer modularen Struktur vor, wobei Schieberegler zur Einstellung von Parametern verwendet werden.

Die WO 2014/026854 A1 offenbart ein Verfahren zum Einstellen eines Wertes eines Parameters, bei dem eine grafische Bedienoberfläche erzeugt und ausgegeben wird, wobei die grafische Bedienoberfläche ein Auswahlobjekt umfasst, das dem Parameter zugeordnet ist; eine erste Nutzereingabe erfasst wird, die eine auf das Auswahlobjekt bezogene Positionierungsgeste umfasst, wobei in Abhängigkeit von der ersten Nutzereingabe ein Einstellobjekt erzeugt und in Abhängigkeit von der Positionierungsgeste auf der grafischen Bedienoberfläche positioniert wird; und eine zweite Nutzereingabe erfasst wird, die eine Einstellgeste umfasst, wobei der Wert des Parameters mittels des Einstellobjekts in Abhängigkeit von der Einstellgeste eingestellt wird.

Der vorliegenden Erfindung liegt die Aufgabe zugrunde, ein Verfahren und ein System zum Einstellen eines Wertes eines Parameters bereitzustellen, die eine besonders gut auf einen Nutzer abgestimmte und sichere Bedienbarkeit erlauben.

Erfindungsgemäß wird diese Aufgabe durch ein Verfahren mit den Merkmalen des Anspruchs 1 und ein System mit den Merkmalen des Anspruchs 9 gelöst. Vorteilhafte Ausgestaltungen und Weiterbildungen ergeben sich aus den abhängigen Ansprüchen.

Bei dem erfindungsgemäßen Verfahren wird eine grafische Bedienoberfläche erzeugt und ausgegeben. Dabei umfasst die grafische Bedienoberfläche ein Auswahlobjekt, das dem Parameter zugeordnet ist. Es wird eine erste Nutzereingabe erfasst, die eine auf das Auswahlobjekt bezogene Positionierungsgeste umfasst, wobei in Abhängigkeit von der ersten Nutzereingabe ein Einstellobjekt erzeugt und in Abhängigkeit von der Positionierungsgeste auf der grafischen Bedienoberfläche positioniert wird. Es wird eine zweite Nutzereingabe erfasst, die eine Einstellgeste umfasst, wobei der Wert des Parameters mittels des Einstellobjekts in Abhängigkeit von der Einstellgeste eingestellt wird. Das Einstellobjekt beim Positionieren vergrößert wird, wobei das Einstellobjekt zunächst mit einer Ausgangsgröße erzeugt wird und die Vergrößerung dann während der Durchführung der Positionierungsgeste erfolgt.

Der Nutzer kann bei diesem Verfahren das Einstellelement vorteilhafterweise frei positionieren, sodass es besonders gut sichtbar und bedienbar ist. Beispielsweise kann ein weit außerhalb des Sichtfeld eines Fahrers angeordnetes Einstellelement an eine besser einsehbare und bedienbare Position gerückt werden. Ferner hat das Verfahren den Vorteil, dass das Einstellelement nur dann angezeigt werden muss, wenn tatsächlich eine Bedienung erfolgen soll, sodass der hierfür benötigte Platz auf einer Anzeigefläche nicht dauerhaft blockiert wird. Ferner wird die Zahl der notwendigen Bedienschritte verringert, da beispielsweise eine einzelne Geste bereits ausreicht, das Einstellelement aufzurufen und zu positionieren, und gegebenenfalls geht diese Geste direkt in eine weitere Geste zum Einstellen eines Parameterwerts über.

Durch die Nutzung von Gesten zum Einstellen des Parameters wird dem Nutzer eine besonders einfache und intuitive Eingabemöglichkeit bereitgestellt. Eine "Geste" im Sinne der Erfindung umfasst eine bestimmte Stellung eines Betätigungsobjekts, etwa eines Stifts oder eines Fingers eines Nutzers, oder eine bestimmte Bewegung, die mit dem Betätigungsobjekt ausgeführt wird. Die Positionierungs- und die Einstellgeste können nach an sich bekannter Art ausgestaltet sein. Sie umfassen insbesondere Zeigegesten, Tipp-, Wisch-, Zieh oder Schiebegesten oder solche Gesten, die im alltäglichen Gebrauch verwendet werden, zum Beispiel Handdrehungen, Greifgesten und Kombinationen mehrerer solcher, gegebenenfalls unmittelbar kurz nacheinander ausgeführter Gesten.

Die Gesten werden in einem Detektionsraum ausgeführt, der insbesondere einen räumlichen Bezug zu einem Anzeigebereich für die grafische Bedienoberfläche aufweist und insbesondere an diesen angrenzt. Insbesondere ist der Detektionsraum eine Detektionsfläche bei der grafischen Bedienoberfläche, etwa eine berührungsempfindliche Oberfläche, die sich zumindest teilweise über die grafische Bedienoberfläche erstreckt.

Die Erfassung der Nutzereingaben und insbesondere der Gesten erfolgt auf an sich bekannte Weise, beispielsweise mittels eines Touchscreens. Ein solcher umfasst eine Anzeigefläche, auf der die grafische Bedienoberfläche ausgegeben werden kann, und eine darüber angeordnete berührungsempfindliche Oberfläche, die beispielsweise mittels kapazitiver oder resistiver Messungen eine Position einer Berührung erfasst. Alternativ oder zusätzlich kann eine Geste oder ein Teil einer Geste in einem Raum vor der grafischen Bedienoberfläche erfasst werden, beispielsweise indem erfasst wird, wenn sich ein Betätigungsobjekt der grafischen Bedienoberfläche oder einem Bereich innerhalb der Bedienoberfläche nähert, oder indem eine bestimmte Richtung einer Zeigegeste hin zu einer bestimmten Position auf der Anzeigefläche erfasst wird. Ferner können andere Eingabevorrichtungen genutzt werden, beispielsweise ein Touchpad, eine Maus oder ein Joystick zum Erfassen der Geste. Ferner kann die grafische Bedienoberfläche eine Darstellung eines Cursors, Mauszeigers oder vergleichbaren Positionsanzeigeobjekts umfassen, dessen Position gesteuert werden kann und anhand dessen Bewegung eine Geste eingegeben werden kann.

Bei einer Ausbildung des erfindungsgemäßen Verfahrens wird die zweite Nutzereingabe unmittelbar anschließend an die erste Nutzereingabe erfasst. Dadurch erfolgt die Bedienung vorteilhafterweise besonders schnell.

Beispielsweise können die erste und die zweite Nutzereingabe eine durchgehende Bewegung aufweisen und etwa als eine durchgehende Wischgeste ausgebildet sein. Bei einer solchen Ausbildung werden die erste und zweite Nutzereingabe insbesondere mittels einer Bewegung entlang einer berührungsempfindlichen Oberfläche ausgeführt, wobei der Nutzer die Oberfläche mit einem Betätigungsobjekt, etwa seinem Finger, berührt und die erste und zweite Nutzereingabe ausführt, ohne währenddessen die Berührung zwischen dem Finger und der Oberfläche zu lösen. Beispielsweise wird der Finger nicht von der Oberfläche abgehoben, ehe die zweite Nutzereingabe beendet ist. In weiteren Beispielen kann vorgesehen sein, dass die erste und/oder zweite Nutzereingabe nicht entlang einer Oberfläche ausgeführt wird; auch hier kann die zweite direkt an die erste Nutzereingabe anschließen. Insbesondere wird zwischen der ersten und der zweiten Nutzereingabe keine weitere Nutzereingabe erfasst.

Bei einer weiteren Ausbildung bilden die erste und zweite Nutzereingabe eine Bewegung und der Beginn der zweiten Nutzereingabe wird erfasst, nachdem die Bewegung, insbesondere für einen Zeitraum, der einen Schwellenwert überschreitet, unterbrochen wird oder nachdem ein Wechsel der Bewegungsrichtung erfasst wird. Die erste und zweite Nutzereingabe können dadurch vorteilhafterweise besonders leicht voneinander abgegrenzt werden.

Die erste und zweite Nutzereingabe bilden insbesondere eine durchgehende Bewegung. Die Positionierungs- und/oder Einstellgeste weist insbesondere eine Bewegungsrichtung auf. Diese kann insbesondere durch ein Auswerten eines Gestenablaufs bestimmt werden, etwa durch einen Vergleich einer Start- und Endposition der Geste oder anhand einer Trajektorie, entlang derer sich ein Betätigungsobjekt bei der Ausführung der Geste bewegt.

Beispielsweise berührt der Nutzer eine berührungsempfindliche Oberfläche an einer ersten Position und führt entlang der Oberfläche eine Bewegung zu einer zweiten Position aus, wobei der Bewegungspfad als Trajektorie erfasst wird. Dies kann als Positionierungsgeste der ersten Nutzereingabe interpretiert werden. Anschließend und ohne seinen Finger von der Oberfläche abzuheben führt der Nutzer eine weitere Bewegung zu einer dritten Position aus, wobei diese weitere Bewegung als Einstellgeste der zweiten Nutzereingabe interpretiert wird.

Um die erste von der zweiten Nutzereingabe zu unterscheiden, kann erfasst werden, dass der Nutzer die Bewegung an der zweiten Position unterbricht, wobei sich die Position der Bewegung für ein bestimmtes Zeitintervall nicht oder höchstens geringfügig verändert. Wenn das Zeitintervall einen Schwellenwert überschreitet, dann wird die anschließend durchgeführte weitere Bewegung zur dritten Position als zur zweiten Nutzereingabe gehörig erkannt.

Alternativ oder zusätzlich kann die Bewegungsrichtung während der ersten Nutzereingabe erfasst werden. Wenn sich die Bewegungsrichtung ändert und diese Änderung insbesondere einen Schwellenwert überschreitet, dann kann dies als Übergang zur zweiten Nutzereingabe erkannt werden. Die Änderung kann beispielsweise anhand einer Ableitung der Geschwindigkeit nach der Zeit bestimmt werden. Ferner kann eine Änderung der Bewegungsrichtung erkannt werden, wenn beispielsweise erfasst wird, dass die Bewegung zunächst überwiegend eine waagrechte und anschließend überwiegend eine senkrechte Komponente aufweist.

Alternativ oder zusätzlich kann ein kurzes Abheben des Betätigungsobjekts von der Oberfläche erfasst werden, insbesondere für eine Dauer kürzer als ein Schwellenwert, wobei eine Geste vor dem Abheben als erste Nutzereingabe und eine Geste nach dem Abheben als zweite Nutzereingabe erkannt wird. Dabei kann ferner ein Schwellenwert vorgesehen sein für einen Abstand zwischen der Endposition der ersten und der Startposition der zweiten Nutzereingabe, wobei der Schwellenwert nicht überschritten werden darf, wenn die Nutzereingaben als aufeinander folgend erfasst werden sollen.

Ferner können zwei Schwellenwerte für das Lösen der Berührung definiert sein: Wird die Berührung für ein Zeitintervall kleiner als der erste Schwellenwert gelöst, so wird diese Unterbrechung ignoriert, das heißt, die fortgesetzte Berührung wird als ununterbrochen bewertet. Dauert die Unterbrechung länger als der erste, aber kürzer als der zweite Schwellenwert, so wird dies als Übergang von der ersten Nutzereingabe zur zweiten Nutzereingabe bewertet. Dauert die Unterbrechung dagegen länger als der zweite Schwellenwert, so wird dies als Abbruch der Bedienung nach der ersten Nutzereingabe bewertet.

Bei der Erfindung umfasst die grafische Bedienoberfläche ein Auswahlobjekt. Dieses kann auf unterschiedliche Weise ausgebildet sein und umfasst insbesondere ein grafisches Objekt an einer bestimmten Position oder in einem bestimmten Bereich auf der Bedienoberfläche. Diesem Auswahlobjekt ist der einstellbare Parameter zugeordnet. Es kann sich beispielsweise um eine Schaltfläche oder eine Anzeigefläche handeln, die insbesondere grafisch so gestaltet ist, dass ein Nutzer erfassen kann, welcher Parameter dem Auswahlobjekt zugeordnet ist, etwa anhand einer Beschriftung oder eines Symbols.

Beispielsweise umfasst das Auswahlobjekt eine Fläche, innerhalb derer der aktuelle Wert des Parameters ausgegeben wird, etwa eine Temperatur oder Intensität einer Klimaanlage, eine Lautstärke oder andere Einstellung einer Medienwiedergabe oder ein Maßstab einer Kartendarstellung.

Ferner ist bei dem Verfahren die Positionierungsgeste der ersten Nutzereingabe auf das Auswahlobjekt bezogen. Das heißt, die Positionierungsgeste wird so ausgeführt, dass ein Bezug zu dem Auswahlobjekt erfasst werden kann. Wenn die Bedienoberfläche beispielsweise mehrere Auswahlobjekte umfasst, kann anhand der Positionierungsgeste ermittelt werden, auf welches des Auswahlobjekte sie sich bezieht. Dieser Bezug kann beispielsweise dadurch erkannt werden, dass die Positionierungsgeste eine Auswahl oder Berührung des Auswahlobjekts oder eine Annäherung daran umfasst. Insbesondere kann die Positionierungsgeste eine Startposition umfassen, die im Bereich des Auswahlobjekts detektiert wird.

Das Erzeugen des Einstellobjekts erfolgt auf an sich bekannte Weise, insbesondere indem das Einstellobjekt auf der grafischen Bedienoberfläche eingeblendet wird. Dies kann ein unmittelbares Erscheinen auf der Bedienoberfläche oder ein Einblenden mittels einer Animation umfassen, etwa indem das Einstellobjekt mit zunehmend geringerer Transparenz eingeblendet wird , indem mit zunehmender Größe geöffnet wird oder indem es eine eigene Bewegung beschreibt und etwa vom Rand der Bedienoberfläche in einer Bewegung erscheint.

Bei einer Weiterbildung des Verfahrens umfasst die Positionierungsgeste eine Wischgeste mit einer Gestentrajektorie, insbesondere von einer Startposition zu einer Zielposition, und das Einstellobjekt wird entlang der Gestentrajektorie verschoben. Dadurch wird vorteilhafterweise eine besonders intuitive Bedienbarkeit erreicht.

Das Einstellobjekt kann hierzu an der Startposition der Gestentrajektorie der Positionierungsgeste erscheinen und seine Position kann dem Verlauf der Gestentrajektorie folgen. Insbesondere wird das Einstellobjekt am Ende der Positionierungsgeste an einer Endposition der Gestentrajektorie positioniert.

Bei einer Ausbildung umfasst das Einstellobjekt einen Schieberegler mit einer Skala und einem Reglerelement, wobei die Einstellgeste ein Verschieben des Reglerelements entlang der Skala umfasst. Die Bedienung ist dadurch vorteilhafterweise an die Bedienung eines analogen Reglers angelehnt, wobei jedoch die Vorteile der flexiblen Darstellung innerhalb der grafischen Bedienoberfläche genutzt werden.

Bei dem Einstellobjekt kann es sich beispielsweise um einen auf der grafischen Bedienoberfläche dargestellten Schieberegler oder "*Slider*" handeln. Ein solches Einstellelement kann durch eine Bewegung anhand einer Geste betätigt werden, die einer Ziehoder Schiebegeste mit Bezug zu der Darstellung des Einstellobjekts entspricht, wobei die entsprechende Bewegung beim Ausführen der Einstellgeste nachvollzogen wird. Bei weiteren Ausführungsbeispielen kann das Einstellelement als Drehregler ausgebildet sein, wobei hier eine Drehgeste als Einstellgeste interpretiert werden kann. Die Einstellgeste entspricht dabei insbesondere einer Bewegung, wie sie beispielsweise bei entsprechenden mechanischen Bedienelementen ausgeführt wird, sodass sich der Nutzer diese Gesten sehr leicht merken kann.

Bei einer weiteren Ausbildung wird während der Einstellgeste der eingestellte Wert des Parameters alphanumerisch angezeigt. Dadurch kann der Wert vorteilhafterweise besonders einfach verfolgt und eingestellt werden.

Der eingestellte Wert kann insbesondere an einer Position relativ zu einem Betätigungsobjekt, etwa einem Finger, auf der grafischen Bedienoberfläche angezeigt werden. Beispielsweise wird die Position einer Berührung des Betätigungsobjekts auf einer berührungsempfindlichen Oberfläche erfasst und der eingestellte Wert wird so neben der Berührungsposition angezeigt, dass er nicht durch das Betätigungsobjekt verdeckt wird. Die Position, an welcher der eingestellte Wert angezeigt wird, verändert sich insbesondere mit einer Bewegung des Betätigungsobjekts.

Die Anzeige kann beispielsweise bei oder über dem Einstellobjekt, etwa einem Regler, erzeugt werden. Ferner kann der eingestellte Wert im Bereich des Auswahlobjekts angezeigt werden. Andererseits kann vorgesehen sein, dass im Bereich des Auswahlobjekts der vor der Bedienung eingestellte Parameterwert angezeigt wird, während der neu eingestellte Wert an einem anderen Ort, etwa bei einem bedienten Regler, angezeigt wird; insbesondere wird der aktualisierte Wert erst nach dem Einstellen des neuen Werts für den Parameter auch im Bereich des Auswahlobjekts angezeigt.

Bei einer Weiterbildung wird das Einstellobjekt beim Positionieren vergrößert. Dadurch wird vorteilhafterweise eine einfachere Bedienbarkeit erreicht. Außerdem kann bei der vergrößerten Darstellung des Einstellobjekts der Wert des Parameters genauer eingestellt werden.

Erfindungsgemäß, wird das Einstellobjekt zunächst mit einer Ausgangsgröße erzeugt,

insbesondere am Beginn der ersten Nutzereingabe. Die Vergrößerung wird während der Durchführung der Positionierungsgeste erfolgen, beispielsweise in Abhängigkeit von oder proportional zur Länge einer Bewegung, die bei der Geste erfasst wird. Die Vergrößerung kann zudem von einem Abstand abhängen zwischen einer Startposition und einer Endposition der Positionierungsgeste. Die Vergrößerung kann ferner von einer Position des Einstellobjekts abhängen, insbesondere entlang einer bestimmten Achse der Bedienoberfläche. Beispielsweise kann diese eine horizontale und eine vertikale Achse aufweisen und die Vergrößerung kann in Abhängigkeit von der Position entlang der vertikalen Achse erfolgen, etwa umso stärker, je weiter oben sich das Einstellobjekt befindet.

Bei einer weiteren Ausbildung wird das Einstellobjekt bei der Positionierungsgeste auf der Bedienoberfläche nach oben verschoben. Das Einstellobjekt kann dadurch vorteilhafterweise besonders gut sichtbar positioniert werden.

Das Einstellobjekt wird anhand der Positionierungsgeste insbesondere von einer Startposition in einem unteren Bereich der Bedienoberfläche in einen oberen Bereich verschoben und dabei in Abhängigkeit von der vertikalen Position vergrößert. Dabei ist insbesondere das Auswahlobjekt in dem unteren Bereich der Bedienoberfläche, etwa innerhalb der unteren 25 % der Bedienoberfläche, bevorzugt innerhalb der unteren 10 % der Bedienoberfläche angeordnet. Ausgehend von dem Auswahlobjekt wird und das Einstellelement in die oberen 25 %, bevorzugt in die oberen 10 % der Bedienoberfläche verschoben. Unten und oben sowie horizontal und vertikal sind dabei relativ zu einem Betrachter der Bedienoberfläche definiert, insbesondere auch relativ zu einem Schwerefeld, in dem die Bedienoberfläche auf einer Anzeigefläche ausgegeben wird.

Dies ist insbesondere in einem Fahrzeug von Bedeutung, wo typischerweise eine Anzeigefläche zum Ausgeben des Bedienoberfläche so angeordnet ist, dass der Fahrer zum Bedienen seine Blickrichtung gegenüber der Beobachtung des Straßenverkehrs absenken muss. Diese Abwendung des Blicks muss möglichst gering und kurz gehalten werden. Je höher das Einstellobjekt innerhalb der Bedienoberfläche positioniert ist, desto geringer ist die notwendige Blickabwendung und desto schneller kann die Bedienung erfolgen.

Wenn das Einstellelement als Schieberegler mit einer Skala und einem Reglerelement ausgebildet ist, kann es zu Beginn der ersten Nutzereingabe so klein dargestellt werden, dass lediglich das Reglerelement sichtbar ist. Beim Verschieben erfolgt eine Vergrößerung des Einstellelements, wobei insbesondere lediglich die Länge der Skala vergrößert wird, während die Größe des Reglerelements konstant bleibt.

Das Vergrößern des Einstellobjekts erfolgt insbesondere in Verbindung mit einer Animation, wobei etwa Zwischenbilder erzeugt und so ausgegeben werden, dass ein kontinuierlicher Übergang zwischen unterschiedlichen Positionen und/oder Größen des Einstellelements dargestellt wird.

Bei einer Ausbildung wird ein Ende der Bedienung erfasst und das Einstellobjekt ausgeblendet.

Dadurch nimmt das Einstellobjekt keinen Raum auf der grafischen Bedienoberfläche ein, wenn es nicht benötigt wird.

Das Ende der Bedienung wird beispielsweise anhand eines Abhebens eines Betätigungsobjekts oder Fingers von einer berührungsempfindlichen Oberfläche erfasst. Das Ausblenden kann mit einer Zeitverzögerung um ein bestimmtes Zeitintervall erfolgen, wobei das Einstellobjekt während dieses Zeitintervalls noch angezeigt wird und wobei die Bedienung innerhalb des Zeitintervalls wieder aufgenommen werden kann.

Das erfindungsgemäße System wird durch den Gegenstand des Anspruchs 9 definiert.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Die Ausgabeeinheit und die Erfassungseinheit des Systems können dabei in einen Touchscreen integriert sein. Dieser weist eine Anzeigefläche auf, die zum Anzeigen der grafischen Bedienoberfläche geeignet ist. Über die Anzeigefläche erstreckt sich auf der dem Betrachter zugewandten Seite eine berührungsempfindliche Oberfläche, die geeignet ist, den Ort und gegebenenfalls die Dauer sowie die Veränderung des Orts einer Berührung zu erfassen. Die berührungsempfindliche Fläche kann sich dabei über einen Teilbereich der Anzeigefläche erstrecken.

Bei weiteren Ausführungen des erfindungsgemäßen Systems kann alternativ oder zusätzlich eine andere Erfassungseinheit vorgesehen sein, beispielsweise eine Maus, ein Joystick, ein Touchpad oder eine Einheit zum Erfassen von Gesten im Raum.

Das erfindungsgemäße Fahrzeug umfasst ein System gemäß der Erfindung.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Systems und
- Figuren 2A bis 2G: zeigen Anzeigen, wie sie bei einem Ausführungsbeispiel des erfindungsgemäßen Verfahrens erzeugbar sind.

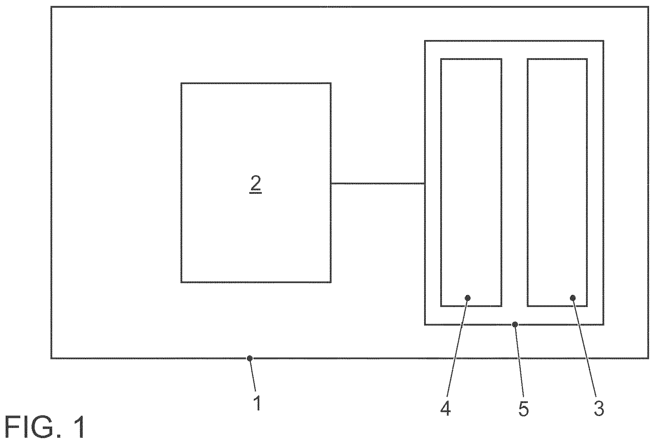

Mit Bezug zu Figur 1 wird ein Fahrzeug mit einem Ausführungsbeispiel des erfindungsgemäßen Systems erläutert.

Das Fahrzeug 1 umfasst eine Steuereinheit 2, mit der ein Touchscreen 5 gekoppelt ist. Der Touchscreen 5 umfasst eine Ausgabeeinheit 3 und eine Erfassungseinheit 4, die auf an sich bekannte Weise ausgebildet sind. Die Ausgabeeinheit 3 ist als Display mit einer Anzeigefläche ausgebildet, die eine grafische Bedienoberfläche ausgeben kann. Die Erfassungseinheit 4 umfasst eine berührungsempfindliche Oberfläche, die sich als durchsichtige Schicht über die Anzeigefläche der Ausgabeeinheit 3 erstreckt und Berührungen erfassen kann.

Die Berührungen werden bei dem Ausführungsbeispiel mittels des Fingers eines Nutzers ausgeführt und es wird die jeweils aktuelle Position der Berührung erfasst. Ferner wird eine Dauer der Berührung sowie eine Veränderung der Position erfasst.

Bei weiteren Ausführungsbeispielen ist eine Annäherungssensorik vorgesehen, durch die eine Annäherung des Fingers oder eines anderen Betätigungsobjekts an den Touchscreen 5 erfasst wird. Der Annäherung wird ferner eine Position auf der Anzeigefläche zugeordnet. Auf diese Weise kann das Betätigungsobjekt analog zu dem Fall während einer Berührung bereits in der Nähe der Anzeigefläche lokalisiert werden.

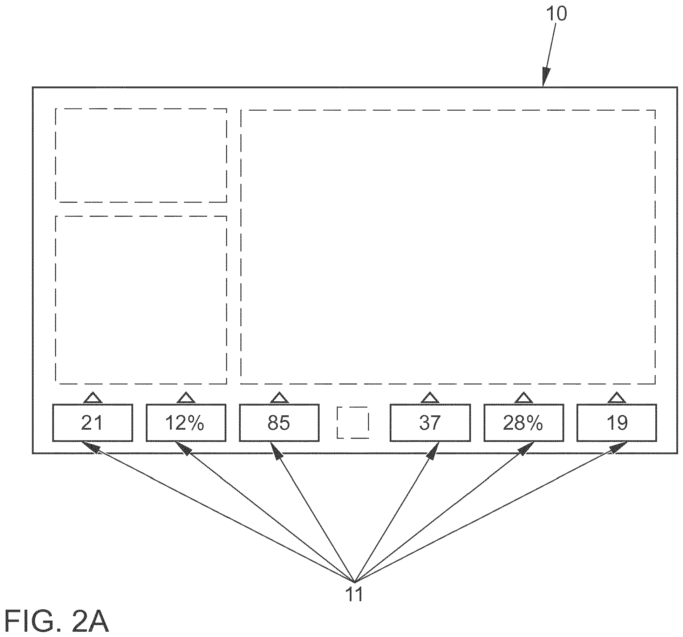

Mit Bezug zu den Figuren 2A bis 2G werden Anzeigen erläutert, wie sie bei einem Ausführungsbeispiel des erfindungsgemäßen Verfahrens erzeugbar sind. Dabei wird von dem oben erläuterten Ausführungsbeispiel des erfindungsgemäßen Systems ausgegangen, welches durch die Beschreibung des Verfahrens weiter spezifiziert wird.

Figur 2A zeigt eine grafische Bedienoberfläche, die auf einer Anzeigefläche 10 ausgegeben wird. Am unteren Rand sind Auswahlobjekte 11 angeordnet, die bei dem Ausführungsbeispiel als rechteckige Flächen ausgebildet sind. Im Bereich der Auswahlobjekte 11 werden ferner Zahlenwerte und Prozentangaben angezeigt, ferner sind oberhalb der rechteckigen Flächen nach oben weisende Pfeilspitzen angeordnet. Die Auswahlobjekte 11 sind bei dem Ausführungsbeispiel verschiedenen Parametern einer Klimasteuerung des Fahrzeugs 1 zugeordnet, beispielsweise eine Temperatur, Gebläseeinstellung und Richtung, jeweils für den linken und rechten Bereich des Fahrzeugs 1. Bei weiteren Ausführungsbeispielen können auch Werte anderer Parameter für andere Einrichtungen eingestellt werden.

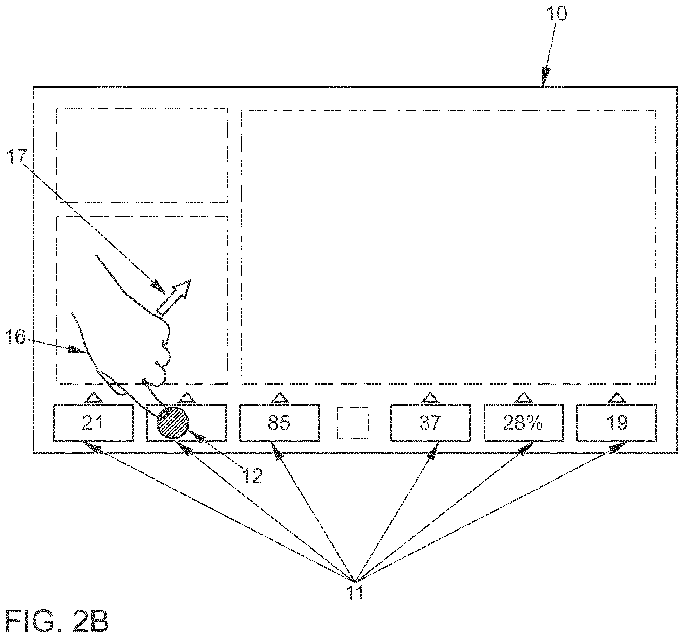

Bei dem in Figur 2B gezeigten Fall hat ein Nutzer mit seinem Finger 16 den Touchscreen 5 an der Position berührt, die einem der Auswahlobjekte 11 innerhalb der Bedienoberfläche entspricht. An der berührten Position wird ein Reglerelement 12 dargestellt, dass bei dem Ausführungsbeispiel in einem kreisrunden grafischen Element besteht. Der Nutzer bewegt anschließend seinen Finger in Richtung des dargestellten Pfeils 17 nach schräg oben, ohne dabei die Berührung zu unterbrechen.

Bei einem weiteren Ausführungsbeispiel kann das ausgewählte Auswahlobjekt 11 hervorgehoben dargestellt werden, beispielsweise mit einer besonderen Farbe.

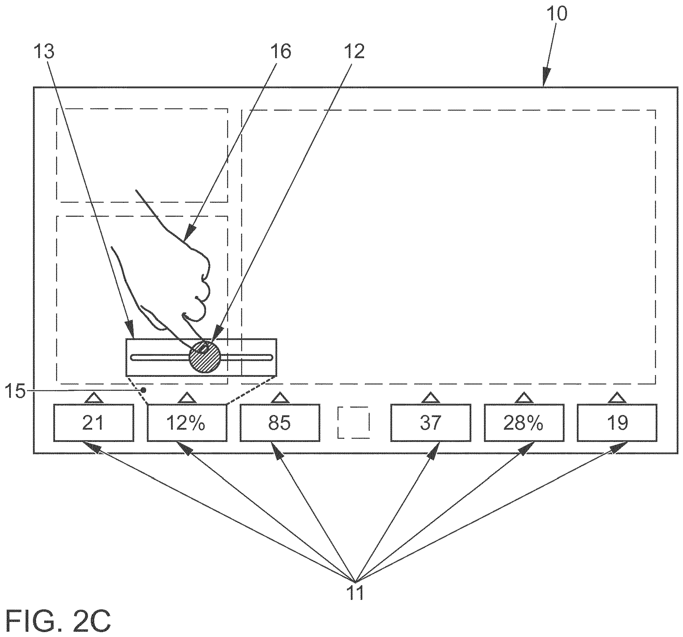

Figur 2C zeigt die Situation, nachdem der Nutzer den Finger 16 ein Stück von dem Auswahlobjekt 11 weg bewegt hat. Das Reglerelement 12 folgt der Bewegung der Position, bei welcher der Finger 16 die Anzeigefläche 10 berührt. Ferner wird jetzt eine Skala 13 angezeigt. Das Element 12 und die Skala 13 bilden ein Einstellelement, das nun sichtbar ist, nachdem die Skala 13 bei dem in Figur 2B gezeigten Fall durch das Reglerelement 12.verdeckt wurde. Zudem wird ein hervorgehobener Bereich 15 angezeigt, der sich von dem zunächst ausgewählten Auswahlobjekt 11 zu der Skala 13 hin erstreckt. Während der Bewegung des Fingers 16 wird ein "Aufziehen" der Skala 13 als Animation dargestellt, das heißt, die Skala 13 wächst ausgehend von der Breite des Auswahlobjekts 11, je weiter sich der Finger 16 in vertikale Richtung nach oben bewegt.

Bei dem Ausführungsbeispiel ist die Skala 13 als horizontale Linie ausgebildet. Diese weist einen farblichen Gradienten auf, der eine Zuordnung verschiedener Werte eines Parameters zu verschiedenen Positionen entlang der Skala 13 verstärkt darstellen. Bei weiteren Ausführungsbeispielen kann die Skala 13 zum Beispiel eine Keilform aufweisen, wie sie etwa von Symbolen zur Lautstärkeregelung bekannt ist. Alternativ oder zusätzlich kann eine farblich kodierte Skala der Werte des Parameters angezeigt werden.

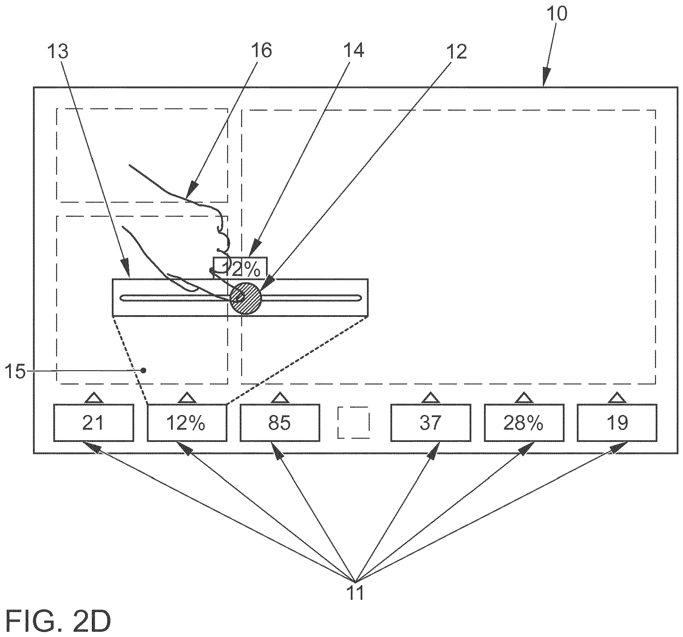

Ein weiterer Schritt der Bedienung ist in Figur 2D gezeigt. Der Nutzer hat den Finger 16 gegenüber Figur 2C, ohne die Berührung von der Anzeigefläche 10 zu lösen, ein Stück weiter nach oben bewegt. Entsprechend wird die Skala 13 weiter vergrößert dargestellt und der hervorgehobene Bereich 15 von dem ausgewählten Auswahlobjekt 11 zu der Skala 13 nimmt eine entsprechend größere Fläche ein.

Zusätzlich zu der Skala 13 wird nun mittig über der Skala eine Ausgabe 14 erzeugt, die alphanumerisch den Wert des dem Auswahlobjekt 11 zugeordneten Parameters anzeigt. Bei einer weiteren Ausbildung der Erfindung kann diese Ausgabe 14 in Abhängigkeit von der Berührung der Anzeigefläche 10 durch den Finger 16 so positioniert werden, dass sie nicht durch den Finger 16 verdeckt wird, sondern etwa in einem bestimmten Abstand seitlich von der Position der Berührung angeordnet ist.

Bei dem Ausführungsbeispiel wird die Ausgabe 14 zusätzlich zu dem Reglerelement 12 und der Skala 13 erst dann angezeigt, wenn die Skala 13 eine bestimmte Größe erreicht hat beziehungsweise wenn ein bestimmter Abstand von den Auswahlobjekten 11 erreicht wurde. Bei weiteren Ausführungsbeispielen kann die Ausgabe 14 bereits früher angezeigt werden oder zu einem späteren Zeitpunkt.

Die Bewegung der Position, bei der der Finger 16 die Anzeigefläche 10 berührt, erfolgt dabei im Allgemeinen nicht ausschließlich in vertikaler Richtung, sondern kann auch eine horizontale Komponente umfassen. Bei dem Ausführungsbeispiel werden dabei die Skala 13 und das Reglerelement 12 gleichermaßen verschoben, das heißt, die Position des Reglerelements 12 relativ zur Skala 13 verändert sich nicht. Ferner führt die Verschiebung in horizontaler Richtung bei dem Ausführungsbeispiel nicht zu einer Vergrößerung der Skala 13. Bei weiteren Ausführungsbeispielen kann jedoch vorgesehen sein, dass bereits in dieser Phase eine horizontale Bewegung zur Verschiebung des Reglerelements 12 gegenüber der Skala 13 führt und/oder dass die Vergrößerung der Skala 13 in Abhängigkeit von der Entfernung zu dem ausgewählten Auswahlelement 11 erfolgt, wobei auch die horizontale Komponente der Entfernung berücksichtigt wird.

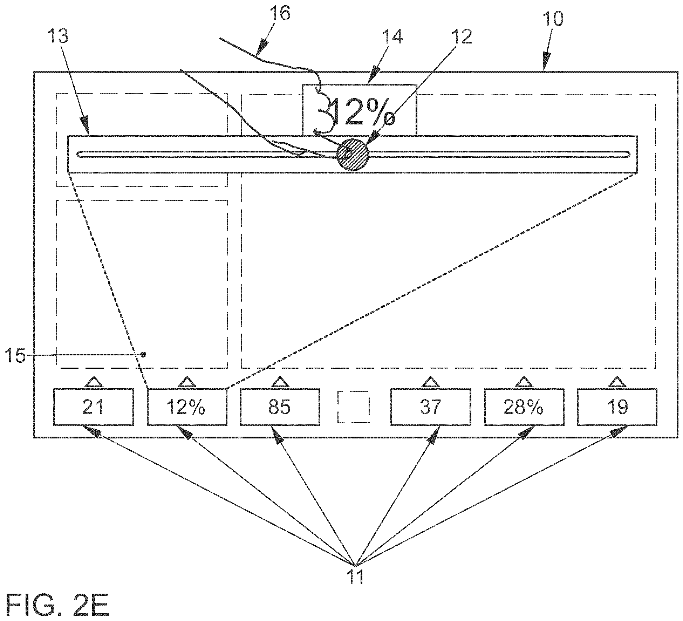

Bei dem in Figur 2E gezeigten Fall wurde das von der Skala 13 und dem Reglerelement 12 gebildete Einstellelement weiter nach oben verschoben, sodass sich die Skala 13 über einen großen Teil der Breite der Anzeigefläche 10 erstreckt. Auch die alphanumerische Ausgabe 14 wurde entsprechend weiter vergrößert. Bis zu diesem Punkt des Bedienablaufs hat der Nutzer das Einstellobjekt auf der Anzeigefläche 10 positioniert, das heißt, es wurde eine erste Nutzereingabe mit einer Positionierungsgeste erfasst.

Bei dem Ausführungsbeispiel unterbricht der Nutzer nun die Verschiebung, ohne dabei die Berührung zwischen dem Finger 16 und der Anzeigefläche 10 zu lösen. Es wird erfasst, wie lange die Berührung ihre Position nicht oder nur unwesentlich verändert, und der erfasste Wert wird mit einem Schwellenwert von 0,5 s verglichen. Dieser Schwellenwert kann bei anderen Ausführungsbeispielen länger oder kürzer sein. Nachdem die Bewegung länger als durch den Schwellenwert festgelegt unterbrochen wurde, wird ein Übergang zu einer zweiten Nutzereingabe mit einer Einstellgeste detektiert.

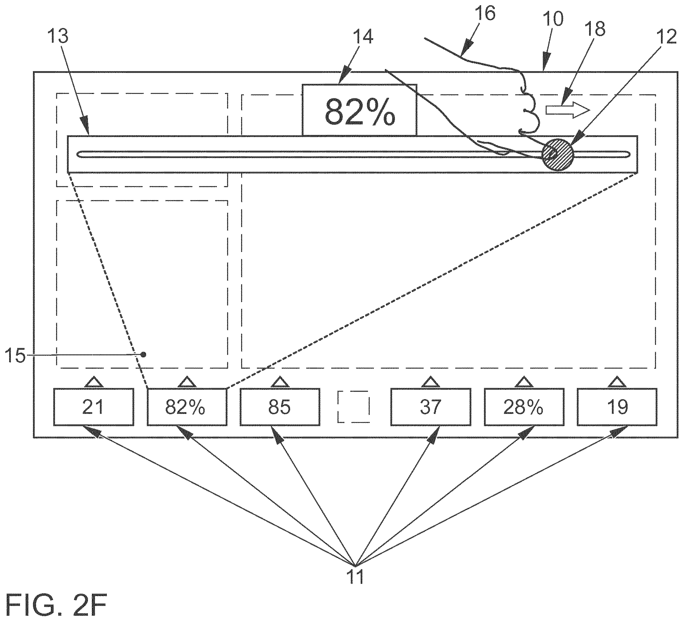

Weitere Bewegungen des Fingers 16 entlang der Anzeigefläche 10 werden als Einstellgesten interpretiert und führen, wie in Figur 2F gezeigt, zu einer Verschiebung des Reglerelements 12 entlang der Skala 13. Das heißt, wenn sich der Finger 16 des Nutzers in die durch den Pfeil 18 angedeutete Richtung bewegt, so bewegt sich im gleichen Maße auch das Reglerelement 12, während die Skala 13 ihre Position nicht mehr verändert. In Abhängigkeit von der Position des Reglerelements 12 relativ zur Skala 13 verändert sich der eingestellte Wert des Parameters, der dem ausgewählten Ausfallobjekt 11 zugeordnet ist. Der entsprechende Wert wird in der alphanumerischen Ausgabe 14 oberhalb der Skala 13 sowie bei dem ausgewählten Ausfallobjekt 11 angezeigt. Weitere Ausführungsbeispiele sehen alternativ oder zusätzlich eine Anzeige mittels einer Farbkodierung oder auf andere Weise vor.

Bei weiteren Ausführungsbeispielen wird der Übergang von der erste Nutzereingabe mit der Positionierungsgeste zu der zweiten Nutzereingabe mit der Einstellgeste auf andere Weise erfasst. Beispielsweise kann ein kurzes Abheben des Fingers 16 von der Anzeigefläche 10 in Verbindung mit einer kurz darauf folgenden Wiederaufnahme der Berührung an der im Wesentlichen gleichen Position erfasst und als Übergang interpretiert werden. Ferner kann ein Richtungswechsel der Bewegung des Fingers 16 erfasst werden, beispielsweise wenn die Bewegung zunächst hauptsächlich in vertikaler Richtung erfolgt und anschließend zu einer hauptsächlich horizontalen Richtung wechselt. Hierzu wird insbesondere die Bewegungsrichtung erfasst und ihre Änderung in Abhängigkeit von der Zeit bestimmt. Alternativ oder zusätzlich können andere Ereignisse vorgesehen sein, die den Übergang von der ersten zur zweiten Nutzereingabe markieren, beispielsweise eine Spracheingabe oder eine andere Eingabe des Nutzers.

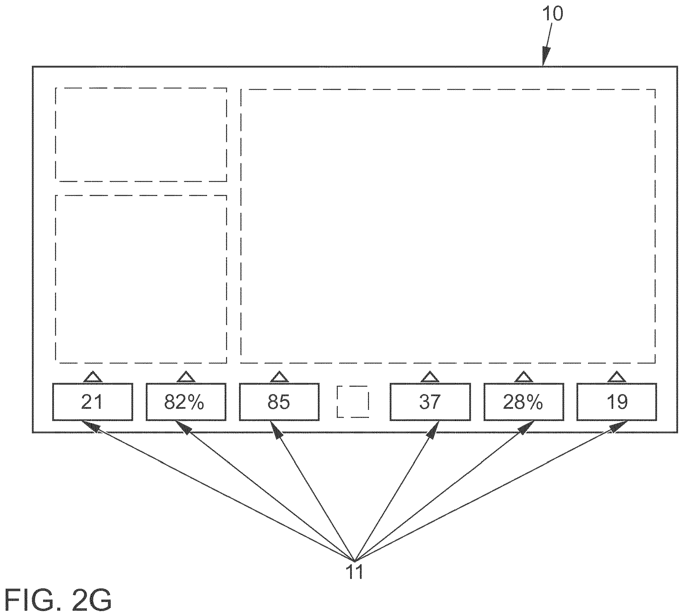

Bei dem in Figur 2G gezeigten Fall hat der Nutzer seinen Finger 16 von der Anzeigefläche 10 gelöst. Die Darstellungen des hervorgehobenen Bereichs 15, der Skala 13, des Reglerelements 12 und der alphanumerischen Ausgabe 14 verschwinden. Dabei verbleibt der eingestellte Wert, wie aus der Anzeige bei dem Auswahlobjekt 11 hervorgeht, bei seiner Einstellung gemäß der Position des Fingers 16 am Ende der Einstellgeste, wie in Figur 2F gezeigt.

Bei einem weiteren Ausführungsbeispiel kann das Verschwinden des Einstellelements anhand einer Animation dargestellt werden, wobei sich das Einstellelement beispielsweise zu dem gewählten Auswahlobjekt 11 hin bewegt und dabei schrumpft, ehe es verschwindet oder ausgeblendet wird.

Bei weiteren Ausführungsbeispielen sind die Auswahlobjekte 11 von einem seitlichen Rand der Anzeigefläche 10 angeordnet und die Verschiebung des Einstellelement mit der Skala 13 und den Reglerelement 12 erfolgt in horizontaler Richtung weg von den Auswahlobjekten 11. Die Darstellung erfolgt dabei analog zu dem oben beschriebenen Ausführungsbeispiel. Insbesondere erfolgt die Vergrößerung in Abhängigkeit von der horizontalen Entfernung des Einstellelement von den Auswahlelementen 11.

Bei dem Ausführungsbeispiel ist das Einstellelement, das von der Skala 13 und dem Reglerelement 12 gebildet wird, nach Art eines horizontalen Schiebereglers ausgebildet. Bei weiteren Ausführungsbeispielen kann eine Ausbildung nach Art eines senkrechten oder in andere Richtung verlaufenden Schieberegler oder als Darstellung eines Drehreglers ausgebildet sein. Andere Ausbildungen des Einstellelement sind selbstverständlich ebenfalls denkbar.

### Bezugszeichenliste

- 1: Fahrzeug
- 2: Steuereinheit
- 3: Ausgabeeinheit
- 4: Erfassungseinheit
- 5: Touchscreen
- 10: Anzeigefläche
- 11: Auswahlobjekt
- 12: Reglerelement
- 13: Skala
- 14: Ausgabe (alphanumerisch)
- 15: hervorgehobener Bereich
- 16: Finger
- 17: Pfeil, Bewegungsrichtung
- 18: Pfeil, Bewegungsrichtung

## Patentansprüche

1. Verfahren zum Einstellen eines Wertes eines Parameters, bei dem
eine grafische Bedienoberfläche erzeugt und ausgegeben wird, wobei
die grafische Bedienoberfläche ein Auswahlobjekt (11) umfasst, das dem Parameter zugeordnet ist;
eine erste Nutzereingabe erfasst wird, die eine auf das Auswahlobjekt (11) bezogene Positionierungsgeste umfasst, wobei in Abhängigkeit von der ersten Nutzereingabe ein Einstellobjekt erzeugt und in Abhängigkeit von der Positionierungsgeste auf der grafischen Bedienoberfläche positioniert wird; und
eine zweite Nutzereingabe erfasst wird, die eine Einstellgeste umfasst, wobei der Wert des Parameters mittels des Einstellobjekts in Abhängigkeit von der Einstellgeste eingestellt wird,
**dadurch gekennzeichnet, dass**
das Einstellobjekt beim Positionieren vergrößert wird, wobei das Einstellobjekt zunächst mit einer Ausgangsgröße erzeugt wird und die Vergrößerung dann während der Durchführung der Positionierungsgeste erfolgt.

2. Verfahren gemäß Anspruch 1,
**dadurch gekennzeichnet, dass**
die zweite Nutzereingabe unmittelbar anschließend an die erste Nutzereingabe erfasst wird.

3. Verfahren gemäß einem der vorhergehenden Ansprüche,
**dadurch gekennzeichnet, dass**
die erste und zweite Nutzereingabe eine Bewegung bilden und der Beginn der zweiten Nutzereingabe erfasst wird, nachdem die Bewegung unterbrochen wird oder nachdem ein Wechsel der Bewegungsrichtung (17, 18) erfasst wird.

4. Verfahren gemäß einem der vorhergehenden Ansprüche,
**dadurch gekennzeichnet, dass**
die Positionierungsgeste eine Wischgeste mit einer Gestentrajektorie umfasst und das Einstellobjekt entlang der Gestentrajektorie verschoben wird.

5. Verfahren gemäß einem der vorhergehenden Ansprüche,
**dadurch gekennzeichnet, dass**
das Einstellobjekt einen Schieberegler mit einer Skala (13) und einem Reglerelement (12) umfasst, wobei die Einstellgeste ein Verschieben des Reglerelements (12) entlang der Skala (13) umfasst.

6. Verfahren gemäß einem der vorhergehenden Ansprüche,
**dadurch gekennzeichnet, dass**
während der Einstellgeste der eingestellte Wert des Parameters alphanumerisch angezeigt wird.

7. Verfahren gemäß einem der vorhergehenden Ansprüche,
**dadurch gekennzeichnet, dass**
das Einstellobjekt bei der Positionierungsgeste auf der Bedienoberfläche nach oben verschoben wird.

8. Verfahren gemäß einem der vorhergehenden Ansprüche,
**dadurch gekennzeichnet, dass**
ein Ende der Bedienung erfasst und das Einstellobjekt ausgeblendet wird.

9. System zum Einstellen eines Wertes eines Parameters, umfassend
eine Steuereinheit (2) zum Erzeugen einer grafischen Bedienoberfläche mit einem Auswahlobjekt (11), das dem Parameter zugeordnet ist;
eine Ausgabeeinheit (3) zum Ausgeben der grafischen Bedienoberfläche; und
eine Erfassungseinheit (4) zum Erfassen einer ersten und einer zweiten Nutzereingabe; wobei
die erste Nutzereingabe eine auf das Auswahlobjekt (11) bezogene Positionierungsgeste umfasst; und
die zweite Nutzereingabe eine Einstellgeste umfasst; wobei
die Steuereinheit (2) dazu eingerichtet ist, anhand der ersten Nutzereingabe die grafische Bedienoberfläche so zu verändern, dass ein Einstellobjekt erzeugt und in Abhängigkeit von der Positionierungsgeste auf der grafischen Bedienoberfläche positioniert wird; und wobei
die Steuereinheit (2) ferner dazu eingerichtet ist, den Wert des Parameters in Abhängigkeit von der Einstellgeste einzustellen,
**dadurch gekennzeichnet, dass**
die Steuereinheit (2) dazu eingerichtet ist, das Einstellobjekt beim Positionieren zu vergrößern, wobei das Einstellobjekt zunächst mit einer Ausgangsgröße erzeugt wird und die Vergrößerung dann während der Durchführung der Positionierungsgeste erfolgt.

## Claims

1. Method for setting a value of a parameter, in which a graphical user interface is generated and output,
the graphical user interface comprising a selection object (11) associated with the parameter;
a first user input, comprising a positioning gesture related to the selection object (11), is logged, the first user input being taken as a basis for generating a setting object and the positioning gesture being taken as a basis for positioning said setting object on the graphical user interface; and
a second user input, comprising a setting gesture, is logged, the value of the parameter being set by means of the setting object on the basis of the setting gesture, **characterized in that**
the setting object is enlarged during positioning, the setting object first being generated with an initial size and the enlargement then taking place while the positioning gesture is performed.

2. Method according to Claim 1,
**characterized in that**
the second user input is logged immediately subsequently to the first user input.

3. Method according to either of the preceding claims, **characterized in that**
the first and second user inputs form a movement and the start of the second user input is detected after the movement is interrupted or after a change in the direction of movement (17, 18) is detected.

4. Method according to one of the preceding claims, **characterized in that**
the positioning gesture comprises a swipe gesture having a gesture trajectory, and the setting object is moved along the gesture trajectory.

5. Method according to one of the preceding claims, **characterized in that**
the setting object comprises a slide control having a scale (13) and a controller element (12), the setting gesture comprising moving the controller element (12) along the scale (13).

6. Method according to one of the preceding claims, **characterized in that**
the set value of the parameter is displayed alphanumerically during the setting gesture.

7. Method according to one of the preceding claims, **characterized in that**
the setting object is moved upwards on the user interface for the positioning gesture.

8. Method according to one of the preceding claims, **characterized in that**
an end of operator control is detected and the setting object is hidden.

9. System for setting a value of a parameter, comprising
a control unit (2) for generating a graphical user interface having a selection object (11) associated with the parameter;
an output unit (3) for outputting the graphical user interface; and
a logging unit (4) for logging a first and a second user input; wherein
the first user input comprises a positioning gesture related to the selection object (11); and
the second user input comprises a setting gesture; wherein
the control unit (2) is configured to take the first user input as a basis for changing the graphical user interface such that a setting object is generated and is positioned on the graphical user interface on the basis of the positioning gesture; and wherein
the control unit (2) is further configured to set the value of the parameter on the basis of the setting gesture,
**characterized in that**
the control unit (2) is configured to enlarge the setting object during positioning, the setting object first being generated with an initial size and the enlargement then taking place while the positioning gesture is performed.

## Revendications

1. Procédé permettant de régler une valeur d'un paramètre, dans lequel
une interface utilisateur graphique est générée et sortie, dans lequel
l'interface utilisateur graphique comprend un objet de sélection (11) qui est associé audit paramètre ;
une première entrée utilisateur est détectée qui comprend un geste de positionnement relatif à l'objet de sélection (11), dans lequel, en fonction de la première entrée utilisateur, un objet de réglage est généré et positionné sur l'interface utilisateur graphique en fonction du geste de positionnement ; et
une deuxième entrée utilisateur est détectée qui comprend un geste de réglage, dans lequel la valeur du paramètre est réglée au moyen de l'objet de réglage en fonction du geste de réglage,
**caractérisé en ce que** l'objet de réglage est agrandi lors du positionnement, l'objet de réglage étant d'abord généré dans une taille initiale et l'agrandissement étant ensuite effectué pendant l'exécution du geste de positionnement.

2. Procédé selon la revendication 1, **caractérisé en ce que** la deuxième entrée utilisateur est détectée de manière immédiatement après la première entrée utilisateur.

3. Procédé selon l'une quelconque des revendications précédentes, **caractérisé en ce que** la première et la deuxième entrée utilisateur constituent un mouvement, et le début de la deuxième entrée utilisateur est détecté après que le mouvement a été interrompu ou après qu'un changement du sens de mouvement (17, 18) a été détecté.

4. Procédé selon l'une quelconque des revendications précédentes, **caractérisé en ce que** le geste de positionnement comprend un geste de balayage avec une trajectoire de geste, et l'objet de réglage est décalé le long de la trajectoire de geste.

5. Procédé selon l'une quelconque des revendications précédentes, **caractérisé en ce que** l'objet de réglage comprend un curseur avec une barre de progression (13) et d'un élément de contrôle (12), le geste de réglage comprenant un décalage de l'élément de contrôle (12) le long de la barre de progression (13).

6. Procédé selon l'une quelconque des revendications précédentes, **caractérisé en ce que** la valeur réglée du paramètre est affichée de manière alphanumérique pendant le geste de réglage.

7. Procédé selon l'une quelconque des revendications précédentes, **caractérisé en ce que** l'objet de réglage est remonté sur l'interface utilisateur lors du geste de positionnement.

8. Procédé selon l'une quelconque des revendications précédentes, **caractérisé en ce qu'**une fin de l'utilisation est détectée et l'objet de réglage est masqué.

9. Système permettant de régler une valeur d'un paramètre, comprenant
une unité de commande (2) pour générer une interface utilisateur graphique avec un objet de sélection (11) qui est associé audit paramètre ;
une unité de sortie (3) pour sortir l'interface utilisateur graphique ; et
une unité de détection (4) pour détecter une première et une deuxième entrée utilisateur ; dans lequel
la première entrée utilisateur comprend un geste de positionnement relatif à l'objet de sélection (11) ; et
la deuxième entrée utilisateur comprend un geste de réglage ; dans lequel
l'unité de commande (2) est conçue pour modifier l'interface utilisateur graphique à l'aide de la première entrée utilisateur de façon à générer un objet de réglage et à le positionner sur l'interface utilisateur graphique en fonction du geste de positionnement ; et dans lequel
l'unité de commande (2) est en outre conçue pour régler la valeur du paramètre en fonction du geste de réglage,
**caractérisé en ce que** l'unité de commande (2) est conçue pour agrandir l'objet de réglage lors du positionnement, l'objet de réglage étant d'abord généré dans une taille initiale, et l'agrandissement étant ensuite effectué pendant l'exécution du geste de positionnement.
